# EUROPEAN PATENT APPLICATION

(11) **EP 4 717 326 A1**
(43) Date of publication of application: **01.04.2026**
(21) Application number: 25193094.7
(22) Date of filing: 31.07.2025
(51) Int. Cl.: A62C 3/16, H01M 10/613, H01M 10/627, H01M 10/6568, H01M 50/209, H01M 50/383

(54) **ENERGY STORAGE SYSTEM**

(30) Priority: 30.09.2024 KR 20240133133
(71) Applicant: SAMSUNG SDI CO., LTD., Yongin-si, Gyeonggi-do 17084 (KR)
(72) Inventor: LEE, Jooyul, 17084 Yongin-si (KR)
(74) Representative: Marks & Clerk LLP

(57) **Abstract**

Provided is an energy storage system including a plurality of battery modules, a cooler configured to supply a cooling fluid to the plurality of battery modules, and a fire-extinguishing tank accommodating a fire-extinguishing agent capable of being supplied to the plurality of battery modules, wherein the plurality of battery modules each include a plurality of cell units which each include a plurality of battery cells arranged in a first direction and which are arranged in a second direction different from the first direction, a cooling plate having a flow path arranged to correspond to an arrangement of the plurality of battery cells, and a fire-extinguishing tube connected to the flow path of the cooling plate and arranged between the plurality of cell units.

## Description

### FIELD

The disclosure relates to an energy storage system.

### BACKGROUND

An energy storage system is a system capable of storing surplus electricity or storing electricity generated by using renewable energy. The energy storage system may be used to store idle electricity during times of low electricity demand and supply electricity during times of high electricity demand, thereby smoothly controlling electricity demand and supply.

A space or facility where the energy storage system is installed and operated needs to be provided with equipment for restraining a battery fire according to a fire caused by an electric shock, a short circuit, an external surge, or the like. With respect to the energy storage system, there is a growing demand for a fire-extinguishing system capable of effectively suppressing multiple battery fires and providing early extinguishment during a high-pressure fire.

The information described in the background of the disclosure is only intended to improve understanding of the background of the disclosure and therefore may include information that does not constitute the related art.

### SUMMARY

Provided is an energy storage system capable of effectively suppressing and extinguishing a fire.

Additional aspects will be set forth in part in the description which follows and, in part, will be apparent from the description, or may be learned by practice of the presented embodiments of the disclosure.

An energy storage system according to an aspect of the disclosure includes a plurality of battery modules, a cooler configured to supply a cooling fluid to the plurality of battery modules, and a fire-extinguishing tank accommodating a fire-extinguishing agent capable of being supplied to the plurality of battery modules, wherein the plurality of battery modules each include a plurality of cell units which each comprising a plurality of battery cells arranged along a first direction and arranged along a second direction different from the first direction, a cooling plate having a flow path arranged to correspond to an arrangement of the plurality of battery cells, and a fire-extinguishing tube connected to the flow path of the cooling plate, the fire-extinguishing tube arranged between the plurality of cell units.

In some embodiments, the energy storage system may further include a first pipe connecting the cooler to a first end of the flow path, and a third pipe connecting the fire-extinguishing tank accommodating the fire-extinguishing agent to the first pipe.

In some embodiments, the energy storage system may further include a second pipe connecting the cooler to a second end of the flow path.

In some embodiments, the energy storage system may further include a detachable first sub-pipe connecting the first pipe to the first end of the flow path.

In some embodiments, the energy storage system may further include a detachable second sub-pipe connecting the second pipe to the second end of the flow path.

In some embodiments, the energy storage system may further include a connector connecting the fire-extinguishing tube to be spaced apart from the cooling plate.

In some embodiments, the connector may be detachably connected to the fire-extinguishing tube or the cooling plate.

In some embodiments, the fire-extinguishing tube may be arranged at a height that is greater than or equal to 30% and less than or equal to 90% of a height of the plurality of battery cells.

In some embodiments, the energy storage system may further include a first spacer and a second spacer arranged between adjacent ones of the plurality of cell units, wherein the fire-extinguishing tube may be arranged between the first spacer and the second spacer.

An energy storage system according to another aspect of the disclosure includes a plurality of battery modules, a cooler configured to supply a cooling fluid to the plurality of battery modules, and a fire-extinguishing tank accommodating a fire-extinguishing agent capable of being supplied to the plurality of battery modules, wherein the plurality of battery modules each include a plurality of cell units each comprising a plurality of battery cells arranged along a first direction and arranged along a second direction different from the first direction, a fire-extinguishing tube arranged between the plurality of cell units, a cooling plate having a flow path arranged to correspond to an arrangement of the plurality of battery cells, a first pipe connecting the cooling plate to the cooler, and a first sub-pipe connecting the fire-extinguishing tube to the first pipe.

In some embodiments, the energy storage system may further include a second pipe connecting the cooler to a second end of the flow path.

In some embodiments, the energy storage system may further include a detachable second sub-pipe connecting the first pipe to the first end of the flow path.

In some embodiments, the energy storage system may further include a detachable third sub-pipe connecting the second pipe to the second end of the flow path.

In some embodiments, the fire-extinguishing tube may be arranged at a height that is greater than or equal to 30% and less than or equal to 90% of a height of the plurality of battery cells.

In some embodiments, the energy storage system may further include a first spacer and a second spacer arranged between adjacent ones of the plurality of cell units and, wherein the fire-extinguishing tube may be arranged between the first spacer and the second spacer.

At least some of the above and other features of the invention are set out in the claims.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a schematic diagram illustrating an example of a fire-extinguishing system of an energy storage system, according to some embodiments of the disclosure;
FIG. 2 is a perspective view illustrating an example of a battery module of FIG. 1, according to some embodiments;
FIG. 3 is a perspective view illustrating a portion of the battery module of FIG. 2, according to some embodiments;
FIG. 4 is a perspective view illustrating an example of a battery cell of the disclosure, according to some embodiments;
FIG. 5 is a perspective view illustrating a portion of the battery module of FIG. 3, according to some embodiments;
FIG. 6 is a plan view illustrating a portion of an energy storage system, according to an embodiment of the disclosure, according to some embodiments;
FIG. 7 is a perspective view illustrating another example of the battery module of FIG. 1, according to some embodiments;
FIG. 8 is a perspective view illustrating a portion of the battery module of FIG. 7, according to some embodiments;
FIG. 9 is a perspective view illustrating a portion of the battery module of FIG. 8, according to some embodiments; and
FIG. 10 is a plan view illustrating a portion of an energy storage system, according to another embodiment of the disclosure, according to some embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, embodiments of the disclosure will be described in detail with reference to the accompanying drawings. Terms or words used in the present specification and claims should not be interpreted as being limited to their usual or dictionary meanings, but should be interpreted as meanings and concepts that conform to the technical scope of the disclosure, based on the principle that an inventor may appropriately define the concepts of the terms in order to explain his or her own invention in the best way. Accordingly, embodiments described in the present specification and configurations illustrated in the drawings are merely some of most preferable embodiments of the disclosure and do not represent all of the technical scope of the disclosure, and thus, it should be understood that there may be various equivalents and modifications that may replace the embodiments at the time of filing the present application.

Also, when used in the present specification, the terms "comprise/include" and/or "comprising/including" specify the presence of stated features, numbers, steps, operations, members, elements, and/or groups thereof, but do not preclude the presence or addition of one or more other features, numbers, operations, members, elements, and/or groups thereof.

In addition, to help understanding of the disclosure, the attached drawings are not illustrated according to an actual scale, and dimensions of some components may be exaggerated. Also, same reference numbers may be assigned to same components in different embodiments.

Although the terms first, second, etc. are used to describe various components, these components are not limited by such terms. These terms are used only to distinguish one component from another, and unless otherwise specifically stated, it is to be understood that a first component may also be a second component.

Throughout the specification, unless otherwise specifically stated, each element may be singular or plural.

A configuration being arranged "above (or under)" a component or "on (or below)" a component may indicate not only that the configuration is in contact with a top surface (or a bottom surface) of the component, but also that another configuration may be arranged between the component and the configuration arranged on (or below) the component.

When it is described that a component is "connected", "coupled", or "accessed" to another component, the components may be directly connected or accessed to each other, but it should also be understood that another component may be "arranged" between the components or that each component may be "connected", "coupled", or "accessed" through another component. Also, when a portion is electrically coupled to another portion, the portions may be directly coupled to each other or the portions may be coupled to each other with another element therebetween.

Throughout the specification, "A and/or B" may indicate A, B, or A and B unless otherwise specified. In other words, "and/or" includes all or any combination of listed items. The expression "C to D" indicate C or more and D or less, unless otherwise specified.

The terms used in the present specification are for describing embodiments of the disclosure and are not intended to be limit of the disclosure.

Hereinafter, embodiments will be described in detail with reference to the accompanying drawings, and in the following description with reference to the drawings, like reference numerals refer to like elements.

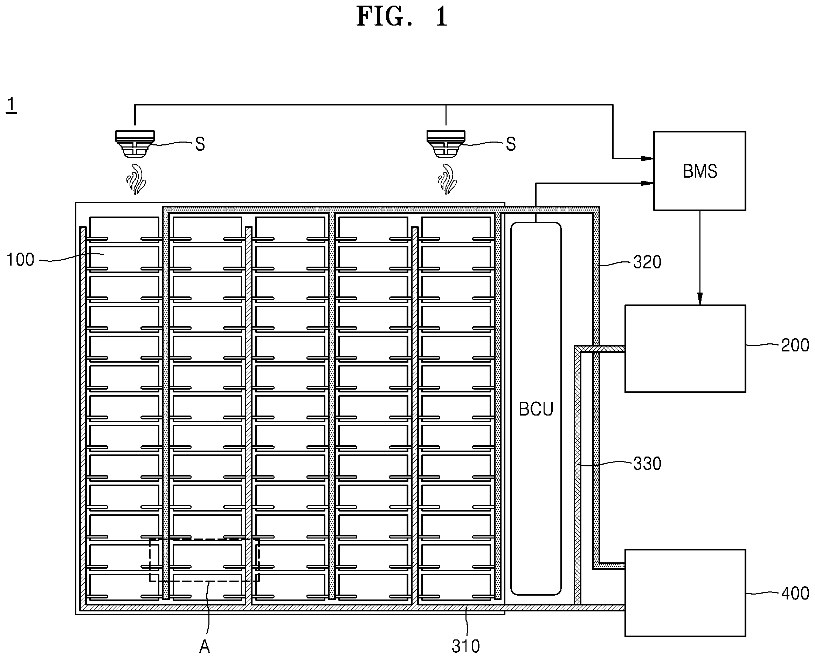

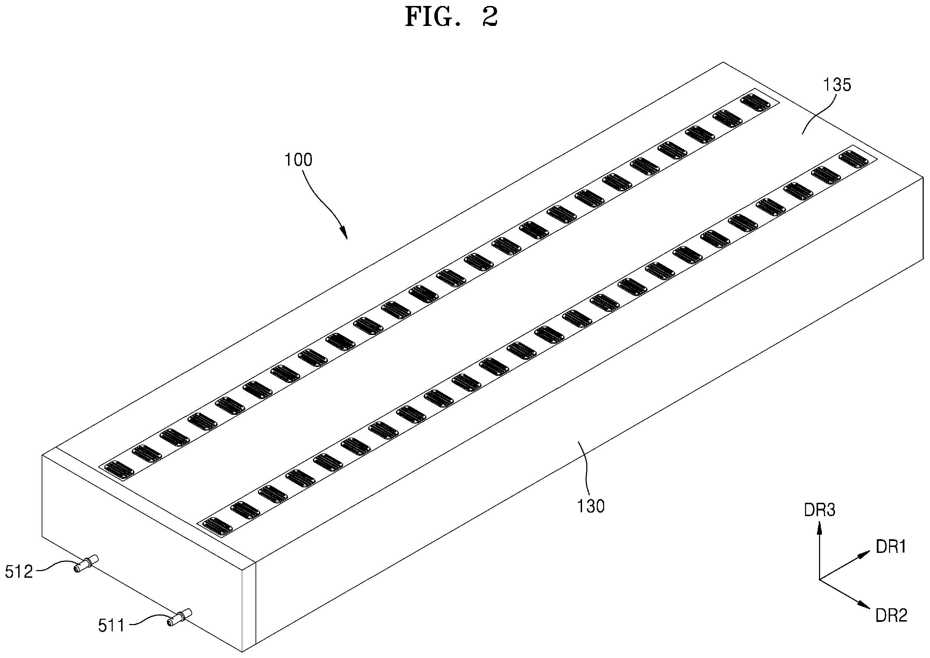

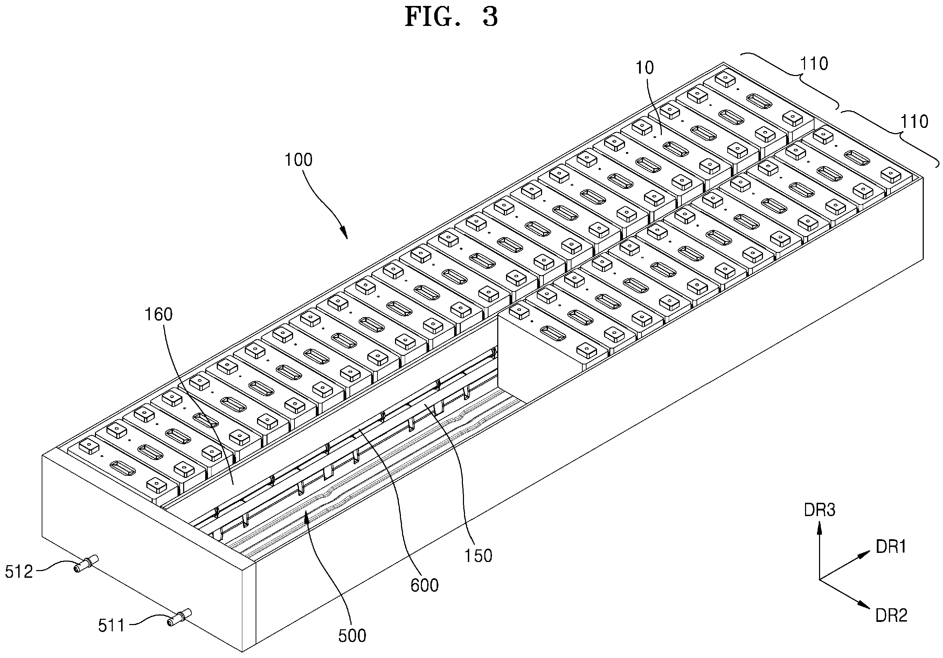

FIG. 1 is a schematic diagram illustrating an example of an energy storage system 1, according to an embodiment of the disclosure. FIG. 2 is a perspective view illustrating an example of a battery module 100 of FIG. 1, FIG. 3 is a perspective view illustrating a portion of the battery module 100 of FIG. 2.

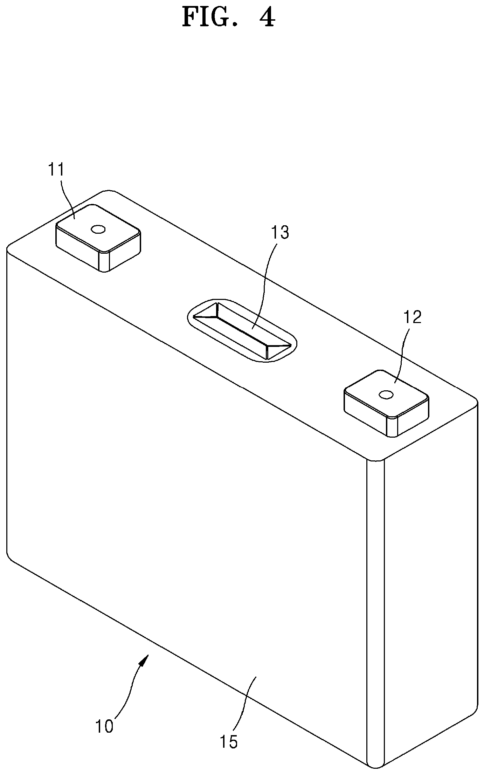

The energy storage system (ESS) 1 is a system capable of generating and storing electricity, and may supply electricity and control power supply and demand in a smooth manner. The energy storage system 1 includes the plurality of battery modules 100 each including a plurality of battery cells 10 (see FIGS. 3 and 4), and thus may easily catch fire and may be susceptible to fire. Hereinafter, the energy storage system 1 of the disclosure with advantageous fire-extinguishing capability will be described.

Referring to FIG. 1, the energy storage system 1 according to some embodiments of the disclosure may include a battery management system BMS, the plurality of battery modules 100, a cooler 400 configured to supply a cooling fluid to the plurality of battery modules 100, and a fire-extinguishing tank 200 including a fire-extinguishing agent that can be supplied to the plurality of battery modules 100.

The battery management system BMS may monitor a voltage, a current, and a temperature of battery modules 100 to maintain the battery modules 100 in an optimal state. In this regard, the battery management system BMS may include a protection circuit module (not shown), a battery control unit BCU, and a sensor S configured to detect at least one of a voltage, a current, a temperature, and smoke generation of the battery cells 10. An electronic component and a protection circuit, mounted on the protection circuit module, may be mounted and electrically connected to a connecting tab that connects the battery cells 10 to each other. In FIG. 1, for convenience of illustration, the battery control unit BCU and the sensor S are shown to be separate from the battery management system BMS, but they both belong to the battery management system BMS.

The battery module 100, according to some embodiments of the disclosure, each include a plurality of cell units 110, a cooling plate 500, and a fire-extinguishing tube 600.

Referring to FIGS. 2 and 3, the plurality of battery modules 100 may include the plurality of cell units 110 each including the plurality of battery cells 10 arranged in a first direction DR1 such that wide surfaces of the battery cells 10 face each other. In this case, the plurality of cell units 110 are arranged in a second direction DR2 different from the first direction DR1.

The arranged plurality of battery cells 10 may be fixed by housings 130 and 135. The housings 130 and 135 may include a pair of end plates facing the wide surface of the battery cell 10, and a side plate 130, a bottom plate, and a top plate 135, which connect the pair of end plates to each other. The side plate 130 may support a side surface of the battery cell 10, the bottom plate may support a bottom surface of the battery cell 10, and the top plate 135 may support a top surface of the battery cell 10. Also, the pair of end plates, the side plate 130, the bottom plate, and the top plate 135 may be connected to each other by members such as bolts.

FIG. 4 is a perspective view illustrating an example of the battery cell 10 of the disclosure.

Referring to FIG. 4, the battery cell 10 may include a battery case 15, and an electrode assembly and an electrolyte, which are accommodated in the battery case 15. The electrode assembly and the electrolyte react electrochemically to generate energy. One side of the battery cell 10 may be provided with terminal units 11 and 12 and a vent 13 that serves as an exhaust passage for a gas generated therein. The terminal units 11 and 12 of the battery cell 10 may include a positive terminal 11 and a negative terminal 12 having different polarities, and the terminal units 11 and 12 of adjacent battery cells 10 may be electrically connected to each other in series or in parallel by the connecting tab. However, the disclosure is not limited to such a structure and various connection structures may be adopted as needed. The battery case 15 may form an overall appearance of the battery cell 10 and may include a conductive metal such as aluminium, an aluminium alloy, or nickel-plated steel. Also, the battery case 15 may provide a space in which an electrode assembly is accommodated.

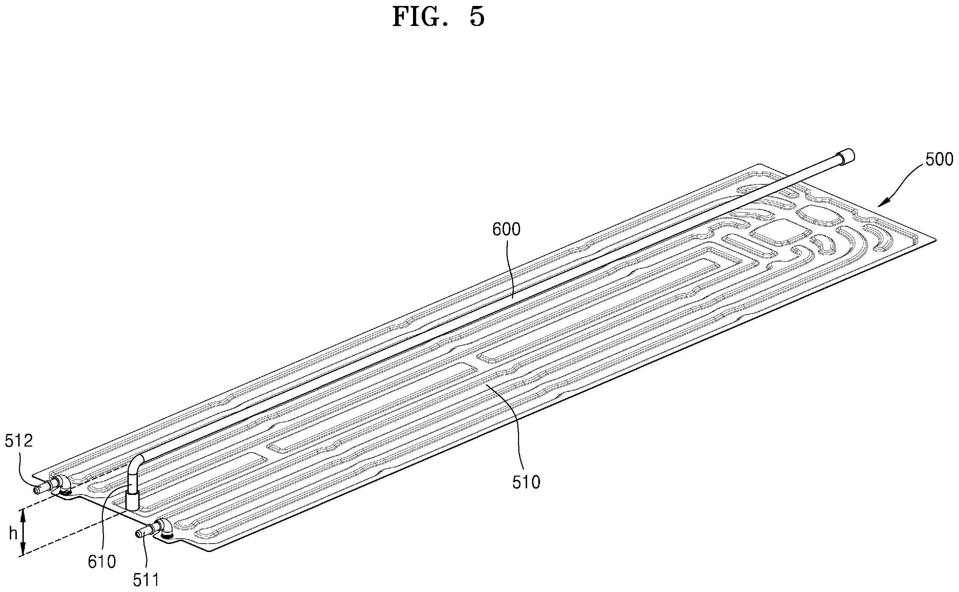

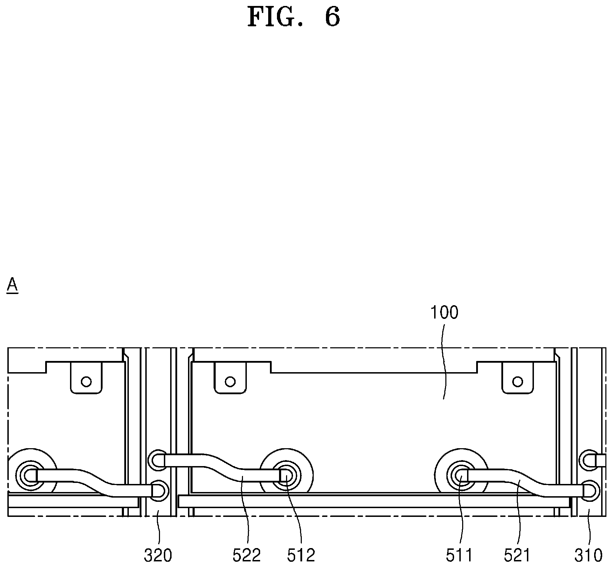

FIG. 5 is a perspective view illustrating a portion of the battery module 100 of FIG. 3, and FIG. 6 is a plan view illustrating a portion of the energy storage system 1, according to some embodiments of the disclosure.

For example, referring to FIGS. 3 and FIG. 5, the battery module 100 may include the cooling plate 500 having a flow path 510 arranged to correspond to an arrangement of the plurality of battery cells 10 and the fire-extinguishing tube 600 connected to the flow path 510 of the cooling plate 500. The fire-extinguishing tube 600 may be arranged between the plurality of cell units 110.

The cooling plate 500 may be arranged so that one surface thereof is adjacent to the battery cells 10 for heat dissipation inside the battery module 100. In particular, the cooling plate 500 may be arranged to be in contact with the bottom surface of the battery cell 10. A fluid for cooling may be supplied to the flow path 510 formed to correspond to the arrangement of battery cells 10.

The fire-extinguishing tube 600 may be arranged along the first direction DR1 between a pair of cell units 110 arranged adjacent to each other inside the battery module 100. In other words, the fire-extinguishing tube 600 may extend in the first direction DR1 through at least one side surface of all cell units 110 in the battery module 100. The fire-extinguishing tube 600, arranged between the plurality of cell units 110, may be connected to the flow path 510 formed in the cooling plate 500 so that a cooling fluid may flow between the plurality of cell units 110 to perform a cooling function. The fire-extinguishing tube 600 is a tube through which the fire-extinguishing agent flows. The fire-extinguishing tube 600 may be a component that moves and sprays the fire-extinguishing agent when a thermal runaway occurs in the battery cell 10.

According to some embodiments, the fire-extinguishing tube 600 may include at least one of polyamide (PA), polycarbonate (PC), polyether ether ketone (PEEK), polyether ketone ketone (PEKK), polyphenylene sulfide (PPS), polyether imide (PEI), polyether sulfone (PES), and/or polyimide (PI), but is not limited thereto. In another example, the fire-extinguishing tube may include a material having a melting point of 260 °C or less.

High heat caused by an event such as a fire or an explosion in the battery cell 10 inside the energy storage system 1 may melt the fire-extinguishing tube 600 near the battery cell 10.

When the fire-extinguishing tube 600 melts during a thermal runaway of one battery cell 10, the cooling fluid and the fire-extinguishing agent inside the fire-extinguishing tube 600 may be sprayed toward the battery cell 10 to suppress the thermal runaway.

For example, the fire-extinguishing tube 600 may be arranged at a height that is greater than or equal to 30% and less than or equal to 90% of a height of the battery cell 10. More specifically, the fire-extinguishing tube 600 may be arranged at any location between a point that is at least 30% of the height of the battery cell 10 and a point that is at most 90% of the height of the battery cell 10, along a direction extending from the lower part of battery cell 10 to the upper part of the battery cell 10.

Referring to FIG. 5, the height h may represent a height at which the fire-extinguishing tube 600 is arranged. The height h may represent a height extending from a lower part of the battery cell 10, the battery cell 10 in contact with the cooling plate 500, to any point that is greater than or equal to 30% and less than or equal to 90% of the height of the battery cell 10 in a direction toward the upper part of the battery cell 10. When the fire-extinguishing tube 600 is arranged at a point greater than or equal to 30% and less than or equal to 90% of the height of the battery cell 10, the fire-extinguishing tube 600 melts immediately near a specific battery cell 10 that has experienced a thermal runaway. The battery cell 10 may then be immersed in the fire-extinguishing agent to lower a temperature of the battery cell 10. The fire may be extinguished, and heat transfer to surrounding battery cells 10 may be substantially prevented.

According to some embodiments, the energy storage system 1 may include a first spacer 150 and a second spacer 160 arranged between adjacent ones of the plurality of cell units 110, and the fire-extinguishing tube 600 may be arranged between the first spacer 150 and the second spacer 160.

The first spacer 150 and the second spacer 160 may be arranged between the battery cells 10. The first spacer 150 and the second spacer 160 may substantially prevent heat from being transferred to other adjacent battery cells 10 when a thermal runaway occurs in a specific battery cell 10. In addition, the first spacer 150 and the second spacer 160, positioned between the battery cells 10, may insulate the battery cells 10 to improve stability of the battery cells 10.

Also, the first spacer 150 and the second spacer 160 may be provided to support one side surface of the battery cell 10, thereby facilitating alignment of the battery cells 10 when assembling the battery module 100. The first spacer 150 and the second spacer 160 may substantially prevent the battery cells 10 from being misaligned and position the fire-extinguishing tube 600 between the first spacer 150 and the second spacer 160 at a certain point of the height of the battery cell 10 to improve structural stability.

According to some embodiments, the energy storage system 1 may further include a connector 610 connecting the fire-extinguishing tube 600 to the cooling plate 500 so as to be spaced apart from the cooling plate 500. The connector 610 may be detachably combined to the fire-extinguishing tube 600 or the cooling plate 500.

As such, the cooling plate 500 and the fire-extinguishing tube 600 inside the battery modules 100 may be connected to each other to simplify an internal structure of the energy storage system 1. The cooling plate 500 and the fire-extinguishing tube 600 may be connected to each other to fix the fire-extinguishing tube 600 so that the fire-extinguishing tube 600 is arranged at a certain point along the height of the battery cell 10. In addition, when a component is to be replaced, the connector 610 may be detached and only the component to be replaced may be separated, thereby simplifying the replacement of the component.

FIG. 6 is an enlargement view illustrating a portion A of the energy storage system 1 of FIG. 1. According to some embodiments, referring to FIGS. 1 and 6, the energy storage system 1 may include a first pipe 310 connecting the cooler 400 to the first end 511 of the flow path 510. In other words, the first pipe 310 may be arranged in an extended form to pass through all of the plurality of battery modules 100.

Accordingly, the fluid cooled down in the cooler 400 may be supplied to the battery module 100 of the energy storage system 1, thereby improving the cooling and heat dissipation effects of the energy storage system 1.

According to some embodiments, the energy storage system 1 may include a third pipe 330 connecting the fire-extinguishing tank 200 accommodating the fire-extinguishing agent to the first pipe 310.

When an event such as a thermal runaway or fire occurs in one of the battery cells 10 of the battery module 100 accommodated in the energy storage system 1, the fire-extinguishing agent may enter the first pipe 310 through the third pipe 330 from the fire-extinguishing tank 200. The fire-extinguishing agent may be supplied to the fire-extinguishing tube 600 in the battery module 100 through a first sub-pipe 521, and then may be sprayed on a corresponding position.

In detail, when an event such as an explosion occurs in any one of the battery cells 10 in the battery module 100, the fire-extinguishing tube 600 near the corresponding battery cell 10 may melt. The cooling fluid and fire-extinguishing agent supplied to the cooling plate 500 may move and be sprayed near the corresponding battery cell 10.

At this time, the cooling fluid circulating through the flow path 510, formed in the cooling plate 500 of the battery module 100, from the cooler 400 through the first pipe 310 may play a primary fire-extinguishing role. The fire-extinguishing agent that starts to be discharged from the fire-extinguishing tank 200 after occurrence of the event is detected may play a secondary fire-extinguishing role.

In this regard, the battery management system BMS may further include a controller configured to supply or block the fire-extinguishing agent of the fire-extinguishing tank 200 when the sensor S detects an event involving a high temperature, high pressure, or smoke.

According to some embodiments, the energy storage system 1 may further include a second pipe 320 connecting the cooler 400 to the second end 512 of the flow path 510. In other words, the second pipe 320 may be arranged in an extended form to pass through all of the plurality of battery modules 100.

A circulation structure may be formed in which the fluid cooled down in the cooler 400 is supplied through the first pipe 310, flows through the flow path 510 formed along the arrangement of battery cells 10 in the battery module 100, and after a temperature of the fluid is increased, is discharged back to the cooler 400 through the second pipe 320.

Accordingly, the temperature of the cooling fluid circulating through the cooling plate 500 in the battery module 100 may be maintained at a relatively low temperature and continuously supplied. Thus, a cooling system of the energy storage system 1 may be operated in an advantageous manner.

According to some embodiments, the energy storage system 1 may further include the first sub-pipe 521 that is detachable and connects the first pipe 310 to the first end 511 of the flow path 510.

The cooling fluid introduced to the first pipe 310 from the cooler 400 through the first sub-pipe 521 may be branched into the inside of each of the plurality of battery modules 100. A detachable structure may be formed between the first pipe 310 and each battery module 100, thereby facilitating assembly of the energy storage system 1 and improving efficiency of component maintenance.

In some embodiments, the first sub-pipe 521 may include a curved shape or a corrugated pipe shape. During assembly, any sagging of the battery modules 100 or the like may be flexibly absorbed by the curved and/or corrugated pipe shape which thereby provides tolerance to the assembly process and improves productivity.

According to some embodiments, the energy storage system 1 may further include a second sub-pipe 522 that is detachable and connects the second pipe 320 to the second end 512 of the flow path 510.

The cooling fluid that is discharged after being branched into the inside of each of the plurality of battery modules 100, through the second sub-pipe 522, and circulating therethrough may join at the second pipe 320 and be transmitted back to the cooler 400. A detachable structure may be formed between the second pipe 320 and each battery module 100, thereby facilitating the assembly process of the energy storage system 1 and improving the efficiency of component maintenance.

At this time, the second sub-pipe 522 may include a curved shape or a corrugated pipe shape. During assembly, any sagging of the battery modules 100 or the like may be flexibly absorbed by the curved and/or corrugated pipe shape which thereby provides tolerance to the assembly process and improves productivity.

It has been described above that the first pipe 310 connects the cooler 400 to the first end 511 as an inlet of the flow path 510 and the second pipe 320 connects the cooler 400 to the second end 512 as an outlet of the flow path 520, but the present disclosure is not limited thereto. According to other embodiments (not shown), the first pipe 310 may connect the cooler 400 to the first end 511 as an outlet of the flow path 510 and the second pipe 320 may connect the cooler 400 to the second end 512 as an inlet of the flow path 520, and at this time, the circulation direction of the cooling fluid is opposite to that shown in FIG. 1.

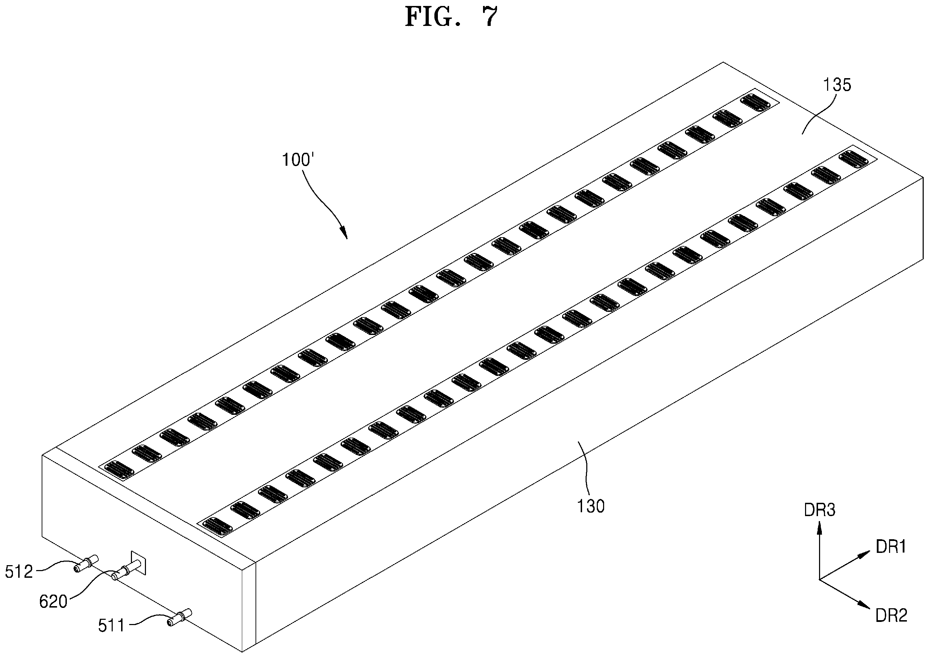

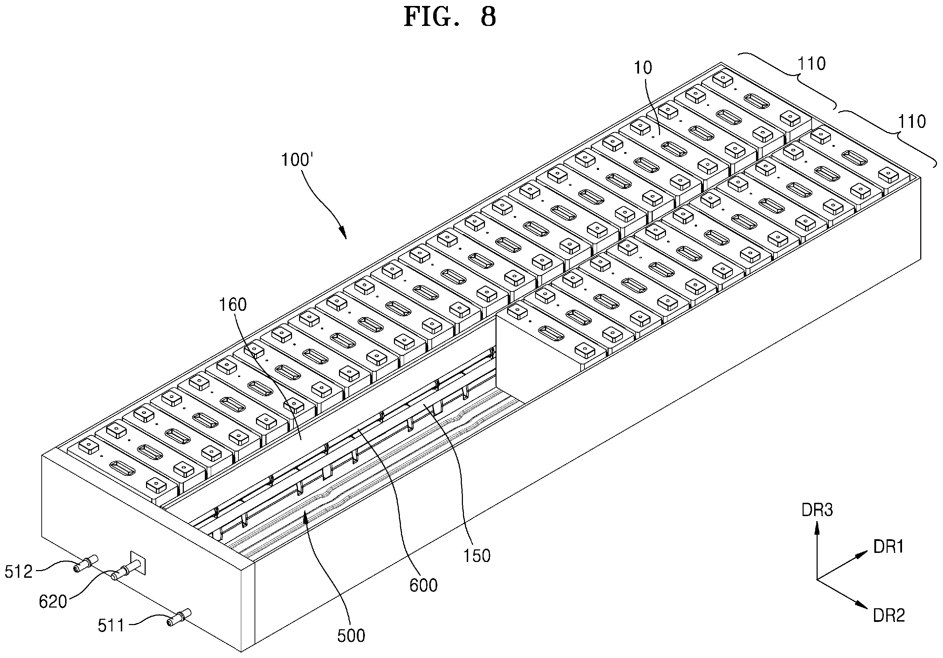

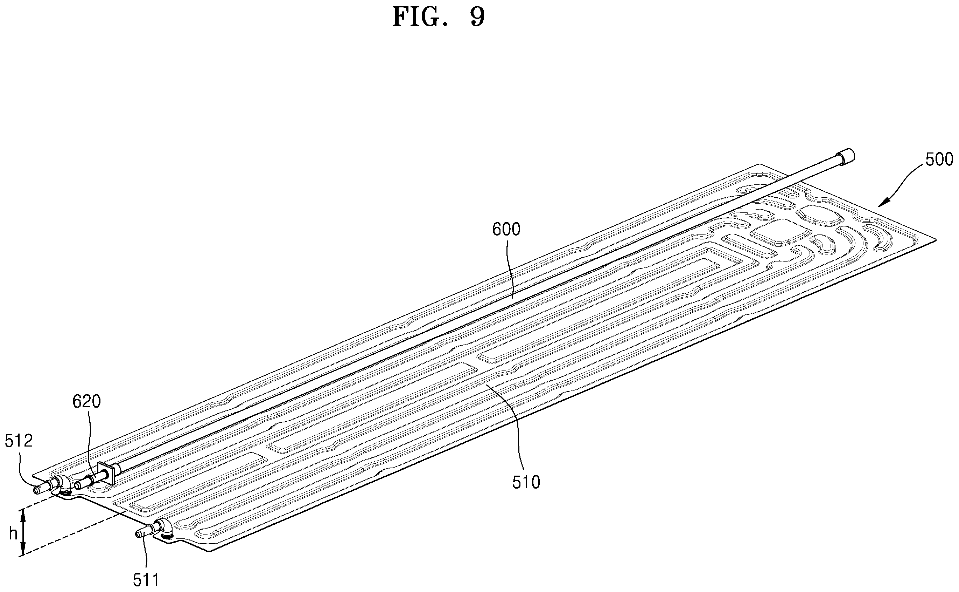

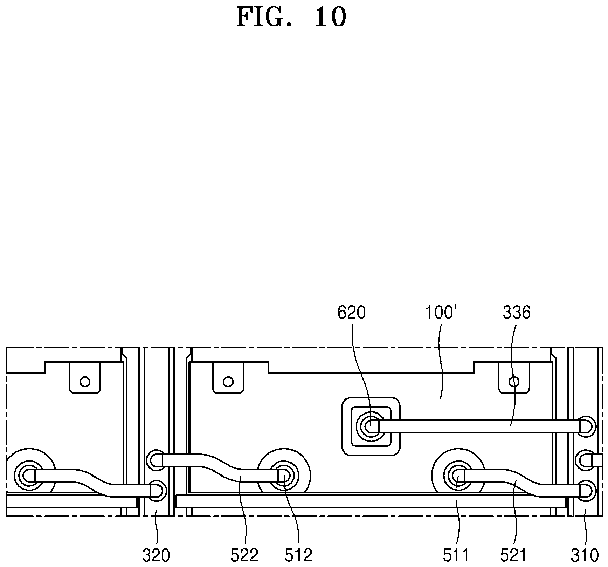

FIG. 7 is a perspective view illustrating another example of a battery module 100' of FIG. 1, and FIG. 8 is a perspective view illustrating a portion of the battery module 100' of FIG. 7. FIG. 9 is a perspective view illustrating a portion of the battery module 100' of FIG. 8, and FIG. 10 is a plan view illustrating a portion of the energy storage system 1, according to some embodiments of the disclosure.

Hereinafter, other embodiments of the disclosure will be described in detail with reference to the accompanying drawings, and in the following description with reference to the drawings, like reference numerals refer to like or corresponding components and redundant descriptions thereof will be omitted.

Referring to FIGS. 7 and 8, according to some embodiments, a plurality of the battery modules 100' each include the plurality of cell units 110 each including the plurality of battery cells 10 arranged in the first direction DR1, the plurality of cell units 110 arranged in the second direction DR2 different from the first direction DR1, the fire-extinguishing tube 600 arranged between the plurality of cell units 110, and the cooling plate 500 having the flow path 510 arranged to correspond to the arrangement of the plurality of battery cells 10.

Referring to FIG. 9, the cooling plate 500 may be arranged so that one surface thereof is adjacent to the battery cells 10 for heat dissipation inside the battery module 100'. In particular, the cooling plate 500 may be arranged to be in contact with the bottom surface of the battery cell 10. The fluid for cooling may be supplied to the flow path 510 formed to correspond to the arrangement of battery cells 10.

The fire-extinguishing tube 600 may be arranged along the first direction DR1 between the pair of cell units 110 arranged adjacent to each other inside the battery module 100'. In other words, the fire-extinguishing tube 600 may extend in the first direction DR1 through at least one side surface of all cell units 110 in the battery module 100'.

The fire-extinguishing tube 600, arranged between the plurality of cell units 110, may be connected to the first pipe 310 so that the cooling fluid may flow between the plurality of cell units 110 to perform the cooling function between the plurality of cell units 110. The fire-extinguishing tube 600 is a tube through which the fire-extinguishing agent flows, and may be a component that moves and sprays the fire-extinguishing agent when a thermal runaway occurs in the battery cell 10.

According to an embodiment, the fire-extinguishing tube 600 may include at least one of polyamide (PA), polycarbonate (PC), polyether ether ketone (PEEK), polyether ketone ketone (PEKK), polyphenylene sulfide (PPS), polyether imide (PEI), polyether sulfone (PES), and/or polyimide (PI), but is not limited thereto. In another example, the fire-extinguishing tube 600 may include a material having a melting point of 260 °C or less.

High heat caused by an event such as a fire or an explosion in the battery cell 10 inside the energy storage system 1 may melt the fire-extinguishing tube 600 near the battery cell 10.

When the fire-extinguishing tube 600 melts during a thermal runaway of one battery cell 10, the cooling fluid and the fire-extinguishing agent inside the fire-extinguishing tube 600 may be sprayed toward the battery cell 10 to suppress the thermal runaway.

For example, the fire-extinguishing tube 600 may be arranged at a height that is greater than or equal to 30% and less than or equal to 90% of a height of the battery cell 10.

When the fire-extinguishing tube 600 is arranged at a point greater than or equal to 30% and less than or equal to 90% of the height of the battery cell 10, the fire-extinguishing tube 600 melts immediately near a specific battery cell 10 that has experienced a thermal runaway. Thus, the battery cell 10 may be immersed in the fire-extinguishing agent to lower a temperature of the battery cell 10. The fire may be extinguished, and heat transfer to surrounding battery cells 10 may be substantially prevented.

According to some embodiments, the first spacer 150 and the second spacer 160 may be arranged between the plurality of cell units 110, and the fire-extinguishing tube 600 may be arranged between the first spacer 150 and the second spacer 160.

The first spacer 150 and the second spacer 160 may be arranged between adjacent ones of the battery cells 10 and prevent heat from being transferred to other adjacent battery cells 10 when a thermal runaway occurs in a specific battery cell 10. In addition, the first spacer 150 and the second spacer 160, positioned between the battery cells 10, may insulate the battery cells 10 to improve stability of the battery cells 10.

Also, the first spacer 150 and the second spacer 160 may be provided to support one side surface of the battery cell 10, thereby facilitating alignment of the battery cells 10 when assembling the battery module 100'. The first spacer 150 and the second spacer 160 may substantially prevent the battery cells 10 from being misaligned, and position the fire-extinguishing tube 600, arranged between the first spacer 150 and the second spacer 160, at a certain point along the height of the battery cell 10 to improve structural stability.

When a temperature increases due to an event such as a fire or an explosion in one battery cell 10, the fire-extinguishing tube 600 near the battery cell 10 may melt. In some embodiments, the fire-extinguishing tank 200 supplies the fire-extinguishing agent, and the fire-extinguishing agent is sprayed to a melted portion of the fire-extinguishing tube 600 to extinguish a fire that has occurred in the battery cell 10. In other words, by directly spraying the fire-extinguishing agent onto the battery cell 10 in which a fire has occurred inside the battery module 100', the battery cell 10 in which the fire has occurred may be cooled down and the fire may be substantially prevented from spreading to the surrounding battery cells 10.

Here, the fire-extinguishing tube 600 may further include an injector 620 that is exposed to the outside of the housings 130 and 135 of the battery module 100' and the fire-extinguishing tube 600, which is disposed inside the battery module 100', may be connected to the outside of the battery module 100' via the injector 620.

FIG. 10 is an enlargement view illustrating a portion corresponding to the portion A of the energy storage system 1 of FIG. 1. Referring to FIGS. 1 and 10, the energy storage system 1 may include the first pipe 310, the second pipe 320, the third pipe 330, the first sub-pipe 521, the second sub-pipe 522, and a third sub-pipe 336.

The first pipe 310 may connect the cooler 400 to the first end 511 of the flow path 510. In other words, the first pipe 310 may be arranged in an extended form to pass through all of the plurality of battery modules 100'.

Accordingly, the fluid cooled down in the cooler 400 may be supplied to the battery module 100' of the energy storage system 1, thereby improving the cooling and heat dissipation effects of the energy storage system 1.

The second pipe 320 may connect the cooler 400 to the second end 512 of the flow path 510. A circulation structure may be formed in which the fluid cooled down in the cooler 400 is supplied through the first pipe 310, flows through the flow path 510 formed along the arrangement of battery cells 10 in the battery module 100', and after a temperature of the fluid is increased, the fluid is discharged back to the cooler 400 through the second pipe 320.

Accordingly, the temperature of the cooling fluid circulating through the cooling plate 500 in the battery module 100' may be maintained at a relatively low temperature and may be continuously supplied. Thus, the cooling system of the energy storage system 1 may be operated in an advantageous manner.

The third pipe 330 may connect the fire-extinguishing tank 200 accommodating the fire-extinguishing agent to the first pipe 310.

According to some embodiments, the third sub-pipe 336 may connect the fire-extinguishing tube 600 to the first pipe 310. In detail, one end of the third sub-pipe 336 may be connected to the injector 620 that is connected to the fire-extinguishing tube 600 and exposed to the outside of the battery module 100'. Another end of the third sub-pipe 336 may be connected to the first pipe 310.

The cooling fluid and fire-extinguishing agent introduced to the first pipe 310 from the cooler 400 through the third sub-pipe 336 may be branched into the inside of each of the plurality of battery modules 100'.

Accordingly, when an event such as a thermal runaway or fire occurs in one of the battery cells 10 of the battery module 100' accommodated in the energy storage system 1, the fire-extinguishing agent may enter the first pipe 310 through the third pipe 330 from the fire-extinguishing tank 200. The fire-extinguishing agent may be supplied to the fire-extinguishing tube 600 in the battery module 100' through the third sub-pipe 336, and then may be sprayed on a corresponding position..

In detail, when an event such as an explosion occurs in any one of the battery cells 10 in the battery module 100', the fire-extinguishing tube 600 near the corresponding battery cell 10 may melt. The cooling fluid and fire-extinguishing agent in the first pipe 310 may move and be sprayed near the corresponding battery cell 10.

The third sub-pipe 336 may be detachably connected to the battery module 100' or the first pipe 310. Accordingly, the assembly process of the product may be facilitated and the efficiency of component maintenance may improve.

Also, the third sub-pipe 336 may include a curved shape or a corrugated pipe shape. During assembly, any sagging of the battery modules 100' or the like may be flexibly absorbed by the curved and/or corrugated pipe shape which thereby provides tolerance to the assembly process and improves productivity.

In other words, according to some embodiments of the disclosure, the energy storage system 1 has a structure in which a separate fire-extinguishing piping structure for branching the fire-extinguishing agent is omitted by connecting the fire-extinguishing tank 200 a cooling pipe and allowing it to be connected to a plurality of battery modules 100'. Such structure of the energy storage system 1 may be easily installed.

Accordingly, the cooling fluid may play a primary fire-extinguishing role before the fire-extinguishing agent reaches the battery cell 10 where the event occurred, and the fire-extinguishing agent may then be directly sprayed onto the battery cell 10, to play a secondary fire-extinguishing role, thereby improving fire-extinguishing efficiency of the energy storage system 1.

While one or more embodiments have been described with reference to the figures, it will be understood by those of ordinary skill in the art that various changes in form and details may be made therein without departing from the scope as defined by the following claims.

According to some embodiments of the disclosure, an energy storage system may be configured such that a fire-extinguishing agent is directly sprayed to the inside of a battery module when a fire occurs, thereby enhancing a fire-extinguishing effect.

In addition, the energy storage system has a structure of supplying the fire-extinguishing agent through a cooling pipe and does not require a separate fire-extinguishing pipe. Thus, manufacturing costs of the energy storage system may be reduced and space efficiency in the energy storage system may be improved.

However, effects that are obtained through the disclosure are not limited to the effects described above, and other technical effects that not mentioned will be clearly understood by one of ordinary skill in the art from the description of the disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. An energy storage system comprising:
a plurality of battery modules;
a cooler configured to supply a cooling fluid to the plurality of battery modules; and
a fire-extinguishing tank accommodating a fire-extinguishing agent capable of being supplied to the plurality of battery modules,
wherein the plurality of battery modules each comprise:
a plurality of cell units each comprising a plurality of battery cells arranged along a first direction and arranged along a second direction different from the first direction;
a cooling plate having a flow path arranged to correspond to an arrangement of the plurality of battery cells; and
a fire-extinguishing tube connected to the flow path of the cooling plate, the first-extinguishing tube arranged between the plurality of cell units.

2. The energy storage system of claim 1, further comprising:
a first pipe connecting the cooler to a first end of the flow path; and
a third pipe connecting the fire-extinguishing tank accommodating the fire-extinguishing agent to the first pipe.

3. The energy storage system of claim 2, further comprising
a second pipe connecting the cooler to a second end of the flow path.

4. The energy storage system of claim 2 or claim 3, further comprising
a detachable first sub-pipe connecting the first pipe to the first end of the flow path.

5. The energy storage system of claim 3 or claim 4, further comprising
a detachable second sub-pipe connecting the second pipe to the second end of the flow path.

6. The energy storage system of any one of claims 1 to 5, further comprising
a connector connecting the fire-extinguishing tube to be spaced apart from the cooling plate.

7. The energy storage system of claim 6, wherein
the connector is detachable from the fire-extinguishing tube or the cooling plate.

8. The energy storage system of any one of claims 1 to 7, wherein
the fire-extinguishing tube is arranged at a height that is greater than or equal to 30% and less than or equal to 90% of a height of the plurality of battery cells.

9. The energy storage system of any one of claims 1 to 8, further comprising
a first spacer and a second spacer arranged between adjacent ones of the plurality of cell units and,
wherein the fire-extinguishing tube is arranged between the first spacer and the second spacer.

10. An energy storage system comprising:
a plurality of battery modules;
a cooler configured to supply a cooling fluid to the plurality of battery modules; and
a fire-extinguishing tank accommodating a fire-extinguishing agent capable of being supplied to the plurality of battery modules,
wherein the plurality of battery modules each comprise:
a plurality of cell units each comprising a plurality of battery cells arranged along a first direction and arranged along a second direction different from the first direction;
a fire-extinguishing tube arranged between the plurality of cell units;
a cooling plate having a flow path arranged to correspond to an arrangement of the plurality of battery cells;
a first pipe connecting the cooling plate to the cooler; and
a first sub-pipe connecting the fire-extinguishing tube to the first pipe.

11. The energy storage system of claim 10, further comprising
a second pipe connecting the cooler to a first end of the flow path.

12. The energy storage system of claim 10 or claim 11, further comprising
a detachable second sub-pipe connecting the first pipe to the first end of the flow path.

13. The energy storage system of claim 11 or claim 12, further comprising
a detachable third sub-pipe connecting the second pipe to a second end of the flow path.

14. The energy storage system of any one of claims 10 to 13, wherein
the fire-extinguishing tube is arranged at a height that is greater than or equal to 30% and less than or equal to 90% of a height of the plurality of battery cells.

15. The energy storage system of any one of claims 10 to 14, further comprising
a first spacer and a second spacer arranged between adjacent ones of the plurality of cell units,
wherein the fire-extinguishing tube is arranged between the first spacer and the second spacer.
